# FASCICULE DE BREVET EUROPEEN

(11) **EP 4 263 454 B1**
(45) Date de publication et mention de la délivrance du brevet: **17.04.2024**
(21) Numéro de dépôt: 21851672.2
(22) Date de dépôt: 14.12.2021
(51) Int. Cl.: C03C 17/36, C03C 23/00

(54) **PROCEDE D'OBTENTION D'UN VITRAGE BOMBE FEUILLETE**
VERFAHREN ZUR HERSTELLUNG EINER GEKRÜMMTEN LAMINIERTEN VERGLASUNG
METHOD FOR OBTAINING CURVED LAMINATED GLAZING

(30) Priorité: 17.12.2020 FR 2013515
(43) Date de publication de la demande: 25.10.2023
(73) Titulaire: Saint-Gobain Glass France, 92400 Courbevoie (FR)
(72) Inventeur: FLAMARY-MESPOULIE, Florian, 60200 COMPIEGNE (FR); JAMART, Juliette, 60200 COMPIEGNE (FR)
(74) Mandataire: Saint-Gobain Recherche
(86) Numéro de dépôt international: PCT/FR2021/052313
(87) Numéro de publication internationale: WO 2022/129769

(56) Documents cités:
- WO-A1-2020/020671
- WO-A1-2020/169732
- WO-A2-2014/133929

## Description

L'invention se rapporte au domaine des vitrages bombés feuilletés pour véhicules automobiles, par exemple pour toits ou pare-brise, comprenant une feuille de verre revêtue d'un empilement de couches minces.

Les vitrages feuilletés sont des vitrages dans lesquels deux feuilles de verre sont liées adhésivement au moyen d'un intercalaire de feuilletage. Ce dernier permet en particulier de retenir les éclats de verre en cas de casse, mais apporte aussi d'autres fonctionnalités, en particulier en termes de résistance à l'effraction ou d'amélioration des propriétés acoustiques.

Ces vitrages comprennent classiquement une zone opaque, généralement noire, habituellement sous forme d'une bande périphérique destinée à dissimuler et protéger contre le rayonnement ultraviolet les joints polymériques servant à la fixation et au positionnement du vitrage dans la baie de carrosserie. Des zones opaques dissimulent également les zones de fixation du rétroviseur intérieur et de différents connecteurs et capteurs.

Ces zones opaques sont souvent obtenues par dépôt de couches d'émail. Dans un vitrage feuilleté, ces couches d'émail sont généralement disposées en face 2, les faces étant traditionnellement numérotées à partir de la face destinée à être positionnée à l'extérieur du véhicule. La face 2 est donc une face en contact avec l'intercalaire de feuilletage. L'émail est généralement obtenu par cuisson au-dessus de 500°C d'une composition comprenant une fritte de verre et des pigments. Une fritte de verre se compose de fines particules d'un verre à bas point de fusion, qui sous l'effet d'un traitement thermique de cuisson se ramollit et adhère à la feuille de verre. On forme ainsi une couche minérale, généralement opaque, à forte résistance chimique et mécanique, adhérant parfaitement au verre en maintenant les particules de pigment. L'étape de cuisson est généralement réalisée simultanément avec le bombage de la feuille de verre.

Dans le contexte de la fabrication de vitrages feuilletés, les deux feuilles de verre du vitrage sont souvent bombées ensemble, la feuille de verre destinée à être positionnée à l'intérieur du véhicule étant généralement disposée au-dessus de l'autre feuille de verre, qui porte l'émail. Il est alors nécessaire que l'émail possède des propriétés antiadhésives afin d'empêcher tout collage entre les deux feuilles de verre durant le bombage. Pour ce faire, on emploie habituellement des émaux contenant du bismuth, c'est-à-dire obtenus à partir de frittes de verre contenant de l'oxyde de bismuth.

Des revêtements, généralement sous forme d'empilements de couches minces, peuvent aussi être présents sur au moins une des feuilles de verre du vitrage feuilleté. Il peut notamment s'agir de couches électroconductrices, lesquelles peuvent apporter deux types de fonctionnalités. Les couches électroconductrices peuvent d'une part, lorsque des amenées de courant sont prévues, dissiper de la chaleur par effet Joule. Il s'agit alors de couches chauffantes, utiles par exemple pour le dégivrage ou le désembuage. Ces couches présentent d'autre part, de par leur réflexion du rayonnement infrarouge, des propriétés de contrôle solaire ou de faible émissivité. Les couches sont alors appréciées pour l'amélioration du confort thermique ou pour les économies d'énergie qu'elles apportent, en diminuant la consommation destinée au chauffage ou à la climatisation. Ces empilements de couches sont généralement disposés en face 3 du vitrage feuilleté, donc également en contact avec l'intercalaire de feuilletage.

Il peut toutefois être intéressant, dans certains cas qui seront détaillés par la suite, de disposer la couche d'émail et l'empilement de couches minces sur la même feuille de verre, et donc sur la même face de la feuille de verre en question afin que ces revêtements soient protégés à l'intérieur du vitrage feuilleté.

Il a toutefois été observé que lorsqu'une feuille de verre revêtue d'un empilement de couches minces devait être pourvue d'une couche d'émail, des interactions indésirables pouvaient se produire lors du bombage entre l'empilement et l'émail, conduisant notamment à une dégradation de l'aspect esthétique de l'émail. Il a notamment été observé, en particulier lorsque l'empilement contenait au moins une couche de nitrure et que l'émail contenait du bismuth, que des bulles se créaient au sein de l'émail, près de l'interface entre ce dernier et l'empilement, occasionnant une baisse significative d'adhésion de l'émail, modifiant son aspect optique (en particulier la couleur côté verre, c'est-à-dire du côté opposé à l'émail) et réduisant sa résistance chimique, en particulier aux acides.

L'aspect esthétique de la zone opaque vue depuis l'extérieur du véhicule revêt une importance particulière pour les constructeurs automobiles. Or les interactions susmentionnées conduisent à une teinte grisâtre indésirable.

Plusieurs solutions ont été proposées à ce problème.

Il est possible de retirer au préalable l'empilement de couches minces aux endroits où la couche d'émail doit être déposée, par exemple au moyen d'abrasifs, afin que l'émail soit déposé au contact direct de la feuille de verre et d'éviter tous problèmes d'interaction entre la couche d'émail et l'empilement de couches minces. Ce démargeage par abrasion mécanique génère toutefois des rayures visibles, y compris au niveau de la couche d'émail.

La demande WO 2014/133929, et avant elle la demande WO0029346, ont proposé l'idée d'utiliser pour l'émail des frittes de verre spéciales capables lors de la cuisson ou d'une pré-cuisson de dissoudre l'empilement de couches minces pour se fixer directement au verre. De tels émaux ne possèdent toutefois pas de bonnes propriétés antiadhésives, entraînant durant le bombage un collage des deux feuilles de verre entre elles.

La demande WO 2019/106264 propose quant à elle de modifier l'empilement de couches minces en ajoutant une couche d'oxyde entre l'empilement et l'émail comprenant du bismuth. Il n'est toutefois pas toujours possible de procéder à une telle modification.

L'invention a pour but d'obvier à ces inconvénients en proposant une autre manière d'obtenir un vitrage feuilleté comprenant un empilement de couches minces et une zone opaque ayant l'aspect en réflexion désiré.

A cet effet, l'invention a pour objet un procédé d'obtention d'un vitrage bombé feuilleté, notamment pour pare-brise ou toit de véhicule automobile, comprenant les étapes suivantes :
a. la fourniture d'une première feuille de verre, revêtue sur au moins une partie d'une de ses faces d'un empilement de couches minces,
b. une étape de dépôt, sur une partie de la surface de l'empilement de couches minces, dans une zone dite « zone à démarger », d'une couche dissolvante lavable,
c. une étape de pré-cuisson à l'issue de laquelle l'empilement de couches minces situé sous la couche dissolvante lavable est dissout par ladite couche dissolvante lavable,
d. une étape d'élimination de la couche dissolvante lavable par lavage, créant une zone démargée,
e. une étape de dépôt, au moins sur une partie de la zone démargée, d'une couche opaque minérale ,
f. une étape de bombage de la première feuille de verre et d'une feuille de verre supplémentaire, ensemble ou séparément,
g. une étape de feuilletage de ladite première feuille de verre avec la feuille de verre supplémentaire au moyen d'un intercalaire de feuilletage, l'empilement de couches minces étant tourné vers l'intercalaire de feuilletage.

L'invention a aussi pour objet un vitrage bombé feuilleté, notamment un pare-brise ou un toit de véhicule automobile, comprenant une première feuille de verre revêtue sur au moins une partie d'une de ses faces, à l'exception d'une zone démargée, d'un empilement de couches minces, et revêtue au moins sur une partie de ladite zone démargée d'une couche opaque minérale, ladite première feuille de verre étant feuilletée avec une feuille de verre supplémentaire au moyen d'un intercalaire de feuilletage, l'empilement de couches minces étant tourné vers ledit intercalaire de feuilletage. Un tel vitrage est notamment obtenu ou susceptible d'être obtenu par le procédé selon l'invention.

Le remplacement de l'émail par une zone opaque formée sur l'intercalaire de feuilletage et la suppression de l'empilement de couches minces au regard de cette zone opaque permettent d'éviter les interactions indésirables susmentionnées et d'assurer une esthétique parfaite. Dans le cadre de la présente invention, l'adjectif « opaque » s'entend en lien avec le rayonnement visible.

### Etape a

La première feuille de verre peut être plane ou bombée. La première feuille de verre est généralement plane au moment du dépôt de l'empilement de couches minces puis de la couche dissolvante lavable, et est ensuite bombée lors de l'étape f. La première feuille de verre est donc bombée dans le vitrage feuilleté bombé selon l'invention.

Le verre de la première feuille de verre est typiquement un verre silico-sodo-calcique, mais d'autres verres, par exemple des borosilicates ou des aluminosilicates peuvent également être employés. La première feuille de verre est de préférence obtenue par flottage, c'est-à-dire par un procédé consistant à déverser du verre fondu sur un bain d'étain en fusion.

La première feuille de verre peut être en verre clair ou en verre teinté, de préférence en verre teinté, par exemple en vert, gris ou bleu. Pour ce faire, la composition chimique de la première feuille de verre comprend avantageusement de l'oxyde de fer, en une teneur pondérale allant de 0,5 à 2%. Elle peut également comprendre d'autres agents colorants, tels que l'oxyde de cobalt, l'oxyde de chrome, l'oxyde de nickel, l'oxyde d'erbium, ou encore le sélénium.

La première feuille de verre présente de préférence une épaisseur comprise dans un domaine allant de 0,7 à 19 mm, notamment de 1 à 10 mm, particulièrement de 2 à 6 mm, voire de 2 à 4 mm.

Les dimensions latérales de la première feuille de verre (et de la feuille de verre supplémentaire) sont à adapter en fonction de celles du vitrage feuilleté auquel elle est destinée à être intégrée. La première feuille de verre (et/ou la feuille de verre supplémentaire) présente de préférence une surface d'au moins 1 m².

Lors de l'étape a, la première feuille de verre est de préférence revêtue de l'empilement de couches minces sur au moins 70%, notamment sur au moins 90%, voire sur la totalité de la surface de la face de la feuille de verre. Certaines zones peuvent en effet ne pas être revêtues afin notamment de ménager des fenêtres de communication laissant passer les ondes.

L'empilement de couches minces est de préférence au contact de la feuille de verre. Lors de son dépôt, la couche dissolvante lavable est de préférence au contact de l'empilement de couches minces.

Par « contact », on entend dans le présent texte un contact physique. Par l'expression « à base de » on entend de préférence le fait que la couche en question comprend au moins 50% en poids du matériau considéré, notamment 60%, voire 70% et même 80% ou 90%. La couche peut même essentiellement consister ou consister en ce matériau. Par « essentiellement consister », il faut comprendre que la couche peut comprendre des impuretés sans influence sur ses propriétés. Les termes « oxyde » ou « nitrure » ne signifient pas nécessairement que les oxydes ou nitrures sont stoechiométriques. Ils peuvent en effet être sous-stoechiométriques, sur-stoechiométriques ou stoechiométriques.

L'empilement comprend de préférence au moins une couche à base d'un nitrure. Le nitrure est notamment un nitrure d'au moins un élément choisi parmi l'aluminium, le silicium, le zirconium, le titane. Elle peut comprendre un nitrure d'au moins deux ou trois de ces éléments, par exemple un nitrure de silicium et de zirconium, ou un nitrure de silicium et d'aluminium. De façon préférée, la couche à base d'un nitrure est une couche à base de nitrure de silicium, plus particulièrement une couche consistant essentiellement en un nitrure de silicium. Lorsque la couche de nitrure de silicium est déposée par pulvérisation cathodique elle contient généralement de l'aluminium, car il est d'usage de doper les cibles de silicium par de l'aluminium afin d'accélérer les vitesses de dépôt.

La couche à base d'un nitrure présente de préférence une épaisseur physique comprise dans un domaine allant de 2 à 100 nm, notamment de 5 à 80 nm.

Les couches à base de nitrure sont couramment employées dans nombre d'empilements de couches minces car elles possèdent des propriétés de blocage avantageuses, en ce sens qu'elles évitent l'oxydation d'autres couches présentes dans l'empilement, notamment des couches fonctionnelles qui seront décrites ci-après.

L'empilement comprend de préférence au moins une couche fonctionnelle, notamment une couche fonctionnelle électro-conductrice. La couche fonctionnelle est de préférence comprise entre deux couches minces diélectriques, dont une au moins est une couche à base de nitrure. D'autres couches diélectriques possibles sont par exemple des couches d'oxydes ou d'oxynitrures.

Au moins une couche fonctionnelle électro-conductrice est avantageusement choisie parmi :
- les couches métalliques, notamment en argent ou en niobium, voire en or, et
- les couches d'un oxyde transparent conducteur, notamment choisi parmi l'oxyde d'indium et d'étain, les oxydes d'étain dopés (par exemple au fluor ou à l'antimoine) et les oxydes de zinc dopés (par exemple à l'aluminium ou au gallium).

Ces couches sont particulièrement appréciées pour leur faible émissivité, qui confère aux vitrages d'excellentes propriétés d'isolation thermique. Dans les vitrages équipant les véhicules terrestres, notamment automobiles, ferroviaires, ou encore les véhicules aériens ou maritimes, les vitrages bas-émissifs permettent par temps chaud de réfléchir vers l'extérieur une partie du rayonnement solaire, et donc de limiter l'échauffement de l'habitacle desdits véhicules, et le cas échéant de réduire les dépenses de climatisation. A l'inverse, par temps froid, ces vitrages permettent de conserver la chaleur au sein de l'habitacle, et par conséquent de réduire l'effort énergétique de chauffage.

Selon un mode de réalisation préféré, l'empilement de couches minces comprend au moins une couche d'argent, notamment une, deux ou trois, voire quatre couche(s) d'argent. L'épaisseur physique de la couche d'argent ou le cas échéant la somme des épaisseurs des couches d'argent est de préférence comprise entre 2 et 20 nm, notamment entre 3 et 15 nm.

Selon un autre mode de réalisation préféré, l'empilement de couches minces comprend au moins une couche d'oxyde d'indium et d'étain. Son épaisseur physique est de préférence comprise entre 30 et 200 nm, notamment entre 40 et 150 nm.

Afin de protéger la ou chaque couche mince électroconductrice (qu'elle soit métallique ou à base d'oxyde transparent conducteur) durant l'étape de bombage, chacune de ces couches est de préférence encadrée par au moins deux couches diélectriques. Les couches diélectriques sont de préférence à base d'oxyde, de nitrure et/ou d'oxynitrure d'au moins un élément choisi parmi le silicium, l'aluminium, le titane, le zinc, le zirconium, l'étain.

Au moins une partie de l'empilement de couches minces peut être déposée par diverses techniques connues, par exemple par dépôt chimique en phase vapeur (CVD), ou par pulvérisation cathodique, notamment assistée par champ magnétique (procédé magnétron).

L'empilement de couches minces est de préférence déposé par pulvérisation cathodique, notamment assistée par champ magnétique. Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur la feuille de verre en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler la feuille de verre sous différentes cibles, ce généralement dans un seul et même dispositif.

Les empilements précités possèdent des propriétés de conduction de l'électricité et de réflexion de l'infrarouge utiles pour procurer une fonction de chauffage (dégivrage, désembuage) et/ou une fonction d'isolation thermique.

Lorsque l'empilement de couches minces est destiné à procurer une fonction de chauffage, des amenées de courant doivent être prévues. Il peut notamment s'agir de bandes en pâte d'argent déposées par sérigraphie sur l'empilement de couches minces, au niveau de deux bords opposés de la feuille de verre. Ces bandes seront cachées par la couche opaque minérale dans le vitrage final.

### Etape b

L'empilement est de préférence revêtu par la couche dissolvante lavable sur 2 à 35%, notamment 3 à 25%, voire 4 à 20% et même 5 à 15% de sa surface. La zone à démarger (et au final la zone démargée) forme de préférence une bande périphérique, c'est-à-dire une bande refermée sur elle-même qui, de chaque point de la périphérie de la première feuille de verre, s'étend vers l'intérieur de la première feuille de verre sur une certaine largeur, typiquement comprise entre 1 et 20 cm. La largeur peut varier selon l'emplacement du point considéré.

Lors de l'étape b, la couche dissolvante lavable est de préférence déposée à partir d'une composition fluide, notamment liquide ou pâteuse. La couche dissolvante lavable est de préférence déposée par sérigraphie. Pour ce faire, on dispose sur la feuille de verre un écran de sérigraphie, lequel comprend des mailles dont certaines sont obturées, puis on dépose la composition fluide sur l'écran, puis on applique un racle afin de forcer la composition fluide à traverser l'écran dans les zones où les mailles de l'écran ne sont pas obturées, de manière à former une couche dissolvante lavable.

L'épaisseur de la couche dissolvante lavable est de préférence comprise entre 5 et 50 pm, notamment entre 10 et 40 pm, voire entre 15 et 30 µm.

L'étape b est de préférence immédiatement suivie d'une étape de séchage, destinée à éliminer au moins une partie du solvant contenu dans la composition fluide. Un tel séchage est typiquement réalisé à une température comprise entre 120 et 180°C.

La couche dissolvante lavable est de préférence une couche minérale comprenant au moins un phosphate. Le phosphate est notamment un phosphate alcalin, de préférence un phosphate de sodium. Par le terme « phosphate », on entend aussi les hydrogénophosphates et les dihydrogénophosphates. Le terme générique phosphate de sodium couvre donc aussi l'hydrogénophosphate de sodium Na₂HPO₄, le dihydrogénophosphate de sodium NaH₂PO₄, et le phosphate trisodique Na₃PO₄, ainsi que les mélanges de ces composés.

La composition fluide comprend de préférence un solvant, notamment organique, et une résine. Les quantités de solvant et de résine permettent de réguler la viscosité de la composition, et sont à adapter en fonction du procédé d'application utilisé.

### Etape c

L'étape de pré-cuisson est de préférence mise en oeuvre à une température comprise entre 150 et 700°C, notamment entre 550 et 700°C.

Une telle pré-cuisson permet d'éliminer le médium organique, ou de manière générale tout composant organique éventuellement présent dans la couche dissolvante lavable.

Lors de la pré-cuisson, l'empilement de couches minces est dissout par la couche dissolvante lavable. La dissolution de l'empilement peut s'observer par microscopie électronique.

### Etape d

L'étape d'élimination de la couche dissolvante lavable permet d'éliminer cette dernière grâce à un lavage.

Dans la zone démargée, la surface du verre est donc nue à l'issue de cette étape, puisqu'elle n'est plus revêtue, ni par l'empilement de couches minces ni par la couche dissolvante lavable.

Le lavage est de préférence mise en oeuvre par projection d'eau sous pression ou au moyen d'une machine à laver munie de brosses. Les brosses doivent être souples de manière à ne pas endommager l'empilement de couches minces.

### Etape e

Dans cette étape, on dépose, au moins sur une partie de la zone démargée, une couche opaque minérale.

La couche opaque minérale est de préférence de couleur noire. La clarté L* en réflexion côté verre (illuminant D65, observateur de référence 10°) est de préférence inférieure ou égale à 10, notamment à 5, voire à 3.

La couche opaque minérale forme sur la première feuille de verre une zone opaque, le reste formant une zone transparente. La zone opaque représente de préférence de 2 à 35%, notamment de 3 à 25%, voire de 4 à 20% et même de 5 à 15% de la surface de la première feuille de verre.

De préférence, la zone démargée et la couche opaque minérale (ou la zone opaque) forment une bande en périphérie de la première feuille de verre.

Ces deux zones peuvent ne pas correspondre parfaitement et exactement l'une avec l'autre, du fait des tolérances dimensionnelles des techniques de dépôt utilisées. Il peut par exemple exister un léger recouvrement entre la zone opaque et des zones revêtues par l'empilement, ou au contraire un espace de verre nu entre la zone opaque et la zone revêtue par l'empilement. Le recouvrement, ou l'espace de verre nu est de préférence inférieur à 1 mm, notamment à 0,5 mm. Afin de rendre moins perceptibles d'éventuels défauts esthétiques dus à ces positionnements relatifs qui ne sont pas exactement en concordance, un décor, par exemple à base de points - comme un dégradé de points-, peut être imprimé dans cette zone.

Selon un mode de réalisation, le dépôt de la couche minérale opaque est réalisé par dépôt d'une composition d'émail comprenant une fritte de verre et des pigments. On forme alors un revêtement d'émail.

La composition d'émail comprend de préférence un médium organique. Ce dernier est éliminé lors de l'étape de bombage, laquelle permet de consolider le revêtement d'émail, voire le cas échéant lors d'un traitement de pré-cuisson de l'émail. Après cuisson, le revêtement d'émail comprend donc des pigments dans une matrice essentiellement vitreuse ou vitro-cristalline.

La fritte de verre ou la matrice vitreuse est de préférence à base d'un borosilicate de bismuth et/ou de zinc. Les borosilicates de bismuth sont préférés car ils présentent une meilleure résistance aux acides.

Selon une variante, l'émail est capable de dissoudre au moins partiellement un empilement de couches minces sous-jacent, lors du bombage ou d'une éventuelle pré-cuisson. Dans ce cas la fritte de verre est préférentiellement à base de borosilicate de bismuth, voire à base de borosilicate de bismuth et de zinc. Afin de la rendre plus « agressive » vis-à-vis de l'empilement de couches et favoriser la dissolution de ce dernier, les teneurs en bismuth et/ou en bore sont de préférence plus élevées que celles des frittes de verre habituellement employées. Cette variante est intéressante pour assurer une parfaite correspondance entre la zone opaque et la zone revêtue par l'empilement, puisque dans le cas d'un chevauchement au moment du dépôt (évitant toute zone de verre nu), la partie du revêtement d'émail situé au-dessus de l'empilement de couches minces sera capable de dissoudre ce dernier et donc de le faire disparaître.

L'épaisseur du revêtement d'émail, après l'étape de bombage, est de préférence comprise dans un domaine allant de 5 à 50 pm, notamment de 10 à 40 µm.

Selon un autre mode de réalisation, le dépôt de la couche minérale opaque est réalisé par dépôt d'une composition de peinture aqueuse comprenant des pigments et une solution aqueuse de silicate alcalin. On forme alors une couche de peinture minérale, dite « peinture silicate ».

La solution aqueuse de silicate alcalin comprend de préférence, au moins un silicate de sodium, de potassium, et/ou de lithium. La solution aqueuse de silicate alcalin peut consister en un mélange de solutions aqueuses de silicates alcalins différents, par exemple un mélange d'au moins une solution aqueuse de sodium et d'au moins une solution aqueuse de potassium.

La composition de peinture comprend de préférence au moins une charge minérale, notamment choisie parmi la silice colloïdale, les feldspaths, l'alumine et les charges lamellaires. Les charges lamellaires sont de préférence choisies parmi le talc, le mica et les argiles, notamment les argiles à base de silicate ou d'aluminosilicate telles que la kaolinite, l'illinite, la montmorillonite et la sépiolite. La composition de peinture comprend avantageusement un mélange de plusieurs de ces charges minérales.

Les charges minérales et les pigments présentent de préférence une distribution granulométrique (en volume) telle que leur d90 est inférieur à 10 µm.

La composition de peinture peut également comprendre une base, notamment un hydroxyde alcalin.

La composition de peinture peut en outre contenir différents additifs, tels qu'au moins un agent dispersant, au moins un agent anti-mousse, au moins un agent épaississant, au moins un agent stabilisant et/ou au moins un agent durcisseur.

Dans la couche de peinture minérale, la teneur pondérale en silicate alcalin est de préférence comprise entre 7% et 60%, notamment entre 15 et 55%. La teneur pondérale totale en pigments et charges minérales est de préférence comprise entre 20 et 90%, notamment entre 30 et 70%. La teneur totale en additifs est de préférence comprise entre 0,1 et 5%. Ces teneurs valent aussi pour la composition de peinture aqueuse (il s'agit alors d'un pourcentage relativement à l'extrait sec).

La couche de peinture minérale finale (après cuisson) comprend donc du silicate alcalin et des pigments, et le cas échéant des charges minérales.

L'épaisseur de la couche de peinture minérale est de préférence comprise entre 2 et 20 pm, notamment entre 3 et 15 pm, voire entre 4 et 10 µm. Il s'agit ici de l'épaisseur de la couche finale, après bombage.

Dans les deux modes de réalisation ci-dessus, les pigments comprennent de préférence un ou plusieurs oxydes choisis parmi les oxydes de chrome, de cuivre, de fer, de manganèse, de cobalt, de nickel. Il peut s'agir à titre d'exemple de chromates de cuivre et/ou de fer.

L'étape de dépôt de la couche de peinture minérale et/ou du revêtement d'émail est de préférence réalisée par sérigraphie. La sérigraphie comprend le dépôt, notamment à l'aide d'un racle, d'une composition fluide sur la feuille de verre au travers de mailles d'un écran de sérigraphie. Les mailles de l'écran sont obturées dans la partie correspondant aux zones de la feuille de verre que l'on ne veut pas revêtir, de sorte que la composition fluide ne peut passer au travers de l'écran que dans les zones à imprimer, selon un motif prédéfini. D'autres techniques de dépôt telles que les techniques d'impression numérique sont également possibles.

L'étape e peut être suivie d'une étape de pré-cuisson e1.

Dans le cas d'une couche de peinture minérale, la pré-cuisson est destinée à durcir la couche de peinture avant l'étape de bombage. Les peintures minérales à base de silicates alcalins peuvent habituellement être durcies à des températures modérées, de l'ordre de 200 à 250°C. L'étape de pré-cuisson est typiquement réalisée dans un four radiatif ou dans un four convectif. Le temps de pré-cuisson est de préférence compris entre 60 et 1000 secondes, notamment entre 100 et 600 secondes, voire entre 120 et 500 secondes. Un simple séchage, notamment entre 120 et 180°C, peut se révéler suffisant.

Dans le cas d'un revêtement d'émail, la pré-cuisson met en oeuvre des températures de préférence comprises entre 550 et 650°C, notamment entre 560 et 600°C. Le traitement de pré-cuisson est en particulier utile pour développer les propriétés anti-adhésion de certains émaux.

### Etape f

Le bombage peut notamment être réalisé par gravité (le verre se déformant sous son propre poids) ou par pressage, à des températures allant typiquement de 550 à 650°C.

Selon un premier mode de réalisation, les deux feuilles de verre (première feuille de verre et feuille de verre supplémentaire) sont bombées séparément.

Selon un deuxième mode de réalisation, la première feuille de verre et la feuille de verre supplémentaire sont bombées ensemble. Les feuilles de verre peuvent être maintenues à distance en disposant entre elles une poudre intercalaire assurant un espace de quelques dizaines de micromètres, typiquement de 20 à 50 µm. La poudre intercalaire est par exemple à base de carbonate de calcium et/ou de magnésium. Lors du bombage, la feuille de verre intérieure (destinée à être positionnée à l'intérieur de l'habitacle), est normalement placée au-dessus de la feuille de verre extérieure. Ainsi, lors de l'étape de bombage, la feuille de verre supplémentaire sera généralement placée au-dessus de la première feuille de verre.

### Etape g

L'intercalaire de feuilletage comprend de préférence au moins une feuille de polyvinylacétal, notamment de polyvinylbutyral (PVB).

L'intercalaire de feuilletage peut être teinté ou non-teinté afin si nécessaire de réguler les propriétés optiques ou thermiques du vitrage.

L'intercalaire de feuilletage peut avantageusement posséder des propriétés d'absorption acoustique afin d'absorber les sons d'origine aérienne ou solidienne. Il peut notamment être constitué à cet effet de trois feuilles polymériques, dont deux feuilles de PVB dites externes encadrant une feuille polymérique interne, éventuellement en PVB, de dureté plus faible que celle des feuilles externes.

L'intercalaire de feuilletage peut également posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent ou un revêtement alternant des couches diélectriques d'indices de réfractions différents, déposé sur une feuille de PET interne encadrée par deux feuilles de PVB externes.

L'épaisseur de l'intercalaire de feuilletage est généralement comprise dans un domaine allant de 0,3 à 1,5 mm, notamment de 0,5 à 1 mm. L'intercalaire de feuilletage peut présenter une épaisseur plus faible sur un bord du vitrage qu'au centre du vitrage afin d'éviter la formation d'une double image en cas d'utilisation d'un système de vision tête haute, dit HUD (head-up display).

L'étape de feuilletage peut être réalisée par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

La feuille supplémentaire est de préférence la feuille intérieure du vitrage feuilleté, c'est-à-dire la feuille située du côté concave du vitrage, destinée à être positionnée à l'intérieur de l'habitacle du véhicule. De la sorte, l'empilement de couches minces est disposé en face 2 du vitrage feuilleté.

La feuille de verre supplémentaire peut être en verre silico-sodo-calcique, ou encore en verre de borosilicate ou d'aluminosilicate. Elle peut être en verre clair ou teinté. Son épaisseur est de préférence comprise entre 0,5 et 4 mm, notamment entre 1 et 3 mm.

Selon un mode de réalisation préféré, la feuille de verre supplémentaire présente une épaisseur comprise entre 0,5 et 1,2 mm. La feuille de verre supplémentaire est notamment en verre d'aluminosilicate de sodium, de préférence renforcé chimiquement. La feuille de verre supplémentaire est de préférence la feuille intérieure du vitrage feuilleté. L'invention est particulièrement utile pour ce type de configuration, pour lequel il est difficile de disposer l'empilement de couches minces en face 3. Le renforcement chimique (aussi appelé « échange ionique ») consiste à mettre en contact la surface du verre avec un sel de potassium fondu (par exemple du nitrate de potassium), de manière à renforcer la surface du verre en échangeant des ions du verre (ici des ions sodium) par des ions de plus grand rayon ionique (ici des ions potassium). Cet échange ionique permet de former des contraintes de compression à la surface du verre et sur une certaine épaisseur. De préférence, la contrainte de surface est d'au moins 300 MPa, notamment 400 et même 500 MPa, et d'au plus 700 MPa, et l'épaisseur de la zone en compression est d'au moins 20 pm, typiquement entre 20 et 50 µm. Le profil de contraintes peut être déterminé de manière connue à l'aide d'un microscope polarisant équipé d'un compensateur de Babinet. L'étape de trempe chimique est de préférence mise en oeuvre à une température allant de 380 à 550°C, et pour une durée allant de 30 minutes à 3 heures. Le renforcement chimique est de préférence réalisé après l'étape de bombage mais avant l'étape de feuilletage. Le vitrage obtenu est de préférence un pare-brise de véhicule automobile, en particulier un pare-brise chauffant.

Selon un autre mode de réalisation préféré, la feuille de verre supplémentaire porte sur la face opposée à la face tournée vers l'intercalaire de feuilletage (de préférence la face 4, la feuille supplémentaire étant la feuille intérieure) un empilement de couches minces supplémentaire, notamment un empilement à faible émissivité, comprenant un oxyde transparent conducteur, notamment l'oxyde d'indium et d'étain (ITO). L'invention est aussi particulièrement utile pour ce type de configuration, pour lequel il est délicat de disposer des empilements de couches minces sur les deux faces de la même feuille de verre (face 3 et 4). Dans ce mode de réalisation, l'intercalaire de feuilletage et/ou la feuille de verre supplémentaire est de préférence teinté(e), la feuille de verre portant les revêtements pouvant être en verre clair. Le vitrage obtenu est de préférence un toit de véhicule automobile.

Comme exemple de ce dernier mode de réalisation préféré, on peut citer un toit bombé feuilleté comprenant, depuis l'extérieur du véhicule, une feuille de verre clair revêtue en face 2 d'un empilement de couches minces comprenant au moins une couche d'argent, un intercalaire de feuilletage en PVB teinté, et une feuille de verre supplémentaire en verre teinté, portant en face 4 un empilement de couches minces à faible émissivité, notamment à base d'ITO.

### Exemples

Les exemples de réalisation qui suivent illustrent l'invention de manière non limitative, en lien avec les figures 1 à 5, dans lesquelles :
- [Fig.1] illustre de manière schématique un mode de réalisation du procédé selon l'invention.
- {Fig.2] illustre un exemple de vitrage obtenu selon l'invention.
- [Fig.3] illustre de manière schématique un autre mode de réalisation du procédé selon l'invention.
- [Fig.4] illustre de manière schématique un autre mode de réalisation du procédé selon l'invention.
- [Fig.5] illustre de manière schématique un autre mode de réalisation du procédé selon l'invention.

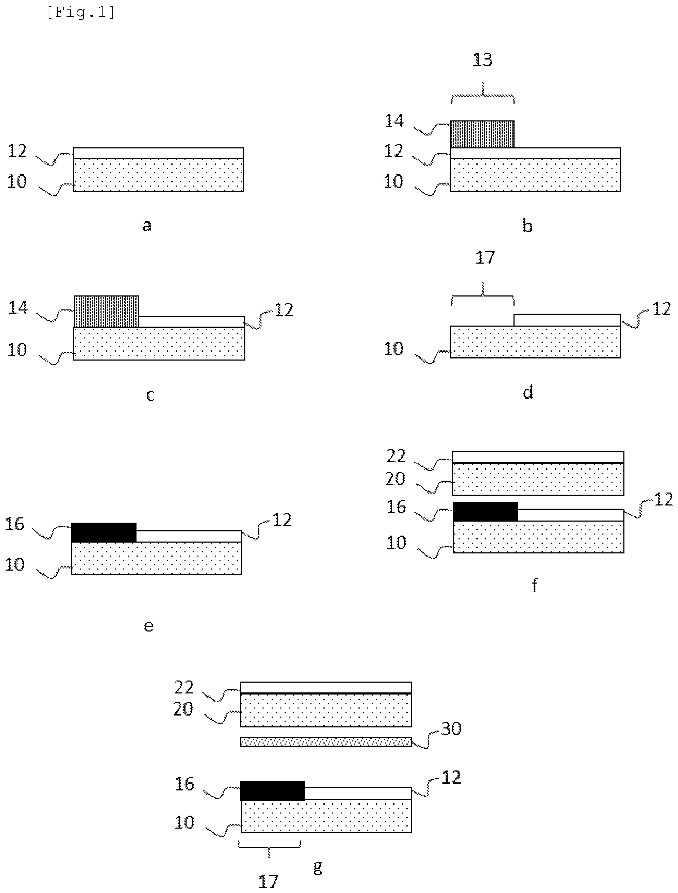

Les figures 1 et 3 à 5 représentent une coupe schématique d'une partie des feuilles de verre et des éléments déposés sur les feuilles de verre, près de la périphérie de ces dernières, lors des étapes du procédé. Les divers éléments ne sont évidemment pas représentés à l'échelle, de manière à pouvoir les visualiser.

La première feuille de verre 10 revêtue de l'empilement de couches minces 12 est fournie dans l'étape a, puis une partie de l'empilement 12 est revêtue par une couche dissolvante lavable 14, notamment par sérigraphie (étape b), dans une zone 13 appelée « zone à démarger ».

Dans l'étape c, la première feuille de verre subit un traitement de pré-cuisson entraînant dans la zone 16 une dissolution de l'empilement 12 par la couche dissolvante lavable 14. Après lavage (étape d), qui entraîne l'élimination de la couche dissolvante lavable 14, la première feuille de verre 10 présente une surface de verre nu dans la zone démargée 17.

Dans l'étape e, une couche opaque minérale 16, telle qu'un revêtement d'émail ou une couche de peinture silicate, est déposée sur la zone démargée 17.

Une feuille de verre supplémentaire 20, ici munie d'un empilement de couches minces supplémentaire 22, est ensuite posée sur la première feuille de verre 10, l'ensemble étant ensuite bombé (étape f). La vue représentée n'étant que celle de l'extrémité de la feuille de verre, le bombage n'est ici pas représenté.

Dans l'étape g, la première feuille de verre 10 revêtue de l'empilement de couches minces 12 et la feuille de verre supplémentaire 20 revêtue de l'empilement supplémentaire 22 sont assemblées à l'aide d'un intercalaire de feuilletage 30. Le schéma représente ici chacun des éléments séparés, en vue éclatée. L'empilement 12, tourné vers l'intercalaire de feuilletage, est positionné dans le vitrage final en face 2.

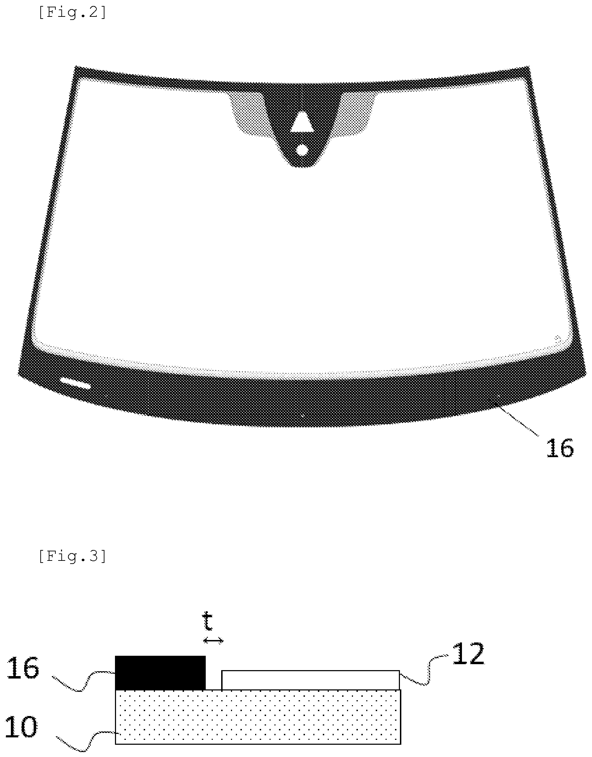

La Figure 2 représente un exemple de vitrage selon l'invention, en l'occurrence un pare-brise, vue de face. La zone opaque formée par la couche opaque minérale 16 se présente sous la forme d'une bande périphérique dont la largeur dépend de la position sur le vitrage. La bande présente ici une faible largeur dans les zones latérales, une grande largeur dans la zone inférieure, et une largeur variable dans la zone supérieure, la bande opaque dissimulant dans la zone supérieure centrale les moyens de positionnement du rétroviseur central et ménageant dans cette zone des fenêtres de transmission pour capteurs et caméras, tels que des capteurs de pluie ou de luminosité ou des caméras d'aide à la conduite ou encore des lidars.

Les figures 3 à 5 illustrent d'autres configurations que la figure 1, dans lesquels la zone opaque formée par la couche opaque minérale 16 et l'empilement de couches minces 12 ne sont pas en correspondance exacte.

En figure 3, il existe un léger espace t entre les deux zones, typiquement d'au plus 1 mm, voire d'au plus 0,5 mm.

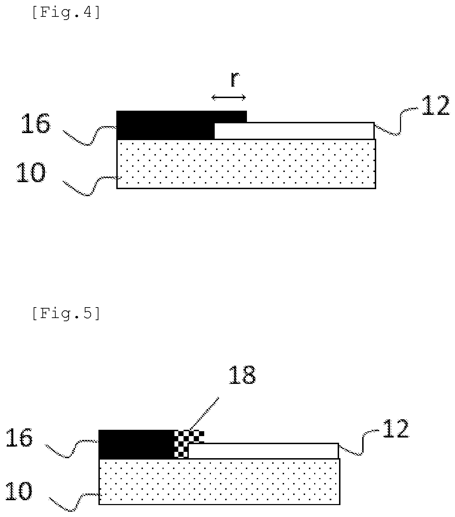

En figure 4 au contraire, un recouvrement r (ou chevauchement) est prévu. Dans un mode préféré de l'invention, le recouvrement existe lors de l'étape e de dépôt de l'émail, mais peut être ultérieurement supprimé grâce au fait que l'émail utilisé est capable de dissoudre l'empilement de couches minces sous-jacent lors du bombage ou d'une éventuelle pré-cuisson e1.

En figure 5, ce recouvrement est rendu moins visible grâce à un dégradé de points 18 obtenu lors de la sérigraphie de la couche opaque minérale.

Les exemples ont été réalisés comme suit.

Une feuille de verre de 2,1 mm d'épaisseur, préalablement revêtue par pulvérisation cathodique d'un empilement de couches minces comprenant deux couches d'argent protégées par des couches d'oxyde de zinc, des couches de nitrure de silicium et des bloqueurs NiCr, a été revêtue, sur une bande périphérique, par sérigraphie d'une couche dissolvante lavable d'une épaisseur humide de 25 µm. La composition déposée était une pâte à base de phosphate de sodium commercialisée par la société Ferro sous la référence TDF9283.

Après séchage (entre 100 et 250°C, 1 à 2 minutes) une étape de pré-cuisson à environ 600°C a permis à la couche dissolvante lavable de dissoudre l'empilement de couches minces. Une étape de lavage a ensuite permis d'éliminer la couche dissolvante lavable.

Une couche opaque minérale a ensuite été déposée par sérigraphie.

Dans une première série d'essais, la couche opaque minérale était une peinture silicate (fournie par la société ICD sous la référence OPH-CG1-231 black) avec un chevauchement ou un espace de verre nu comme représenté aux figures 3 et 4. L'épaisseur déposée était de 25 µm humide, pour environ 8 µm après cuisson. Un séchage à environ 150°C a été réalisé après dépôt.

Dans une deuxième série d'essais, la couche opaque minérale était un revêtement d'émail à base de borosilicate de bismuth et de zinc capable de dissoudre l'empilement de couches minces. Le dépôt a été réalisé avec un chevauchement (comme illustré en figure 4), de manière à assurer au final une parfaite jonction avec la zone revêtue par l'empilement de couches minces. Une étape de pré-cuisson à environ 600°C a été réalisée après dépôt.

Après appairage avec une feuille de verre supplémentaire en verre silico-sodo-calcique munie en face 4 d'un empilement comprenant une couche d'ITO, l'ensemble a été bombé à plus de 600°C pendant 350 à 500 secondes. Les deux feuilles de verre ont ensuite été feuilletées ensemble au moyen d'un intercalaire en PVB.

Après assemblage, l'esthétique, plus particulièrement la couleur noire vue depuis la face 1, a été évaluée par la mesure de la clarté L* en réflexion (illuminant D65, observateur de référence 10°). La valeur de L* mesurée était inférieure à 5.

## Revendications

1. Procédé d'obtention d'un vitrage bombé feuilleté, notamment pour pare-brise ou toit de véhicule automobile, comprenant les étapes suivantes :
a. la fourniture d'une première feuille de verre (10), revêtue sur au moins une partie d'une de ses faces d'un empilement de couches minces (12),
b. une étape de dépôt, sur une partie de la surface de l'empilement de couches minces (12), dans une zone dite « zone à démarger » (13), d'une couche dissolvante lavable(14),
c. une étape de pré-cuisson à l'issue de laquelle l'empilement de couches minces (12) situé sous la couche dissolvante lavable (14) est dissout par ladite couche dissolvante lavable (14),
d. une étape d'élimination de la couche dissolvante lavable (14) par lavage, créant une zone démargée (17),
e. une étape de dépôt, au moins sur une partie de la zone démargée (17), d'une couche opaque minérale (16),
f. une étape de bombage de la première feuille de verre (10) et d'une feuille de verre supplémentaire (20), ensemble ou séparément,
g. une étape de feuilletage de ladite première feuille de verre (10) avec la feuille de verre supplémentaire (20) au moyen d'un intercalaire de feuilletage (30), l'empilement de couches minces (12) étant tourné vers l'intercalaire de feuilletage (30).

2. Procédé selon la revendication 1, tel que l'empilement de couches minces (12) comprend au moins une couche fonctionnelle, notamment une couche fonctionnelle électro-conductrice, en particulier choisie parmi les couches métalliques, notamment en argent ou en niobium, et les couches d'un oxyde transparent conducteur, notamment choisi parmi l'oxyde d'indium et d'étain, les oxydes d'étain dopés et les oxydes de zinc dopés.

3. Procédé selon l'une des revendications précédentes, dans lequel la couche dissolvante lavable (14) est déposée à partir d'une composition fluide, notamment liquide ou pâteuse.

4. Procédé selon la revendication précédente, dans lequel la couche dissolvante lavable (14) est déposée par sérigraphie.

5. Procédé selon l'une des revendications précédentes, dans lequel l'épaisseur de la couche dissolvante lavable (14) est comprise entre 5 et 50 pm, notamment entre 10 et 40 µm

6. Procédé selon l'une des revendications précédentes, dans lequel la couche dissolvante lavable (14) est une couche minérale comprenant au moins un phosphate.

7. Procédé selon la revendication précédente, dans lequel le phosphate est un phosphate alcalin, de préférence un phosphate de sodium.

8. Procédé selon l'une des revendications précédentes, dans lequel l'étape b est immédiatement suivie d'une étape de séchage.

9. Procédé selon l'une des revendications précédentes, dans lequel la zone démargée (17) et la couche opaque minérale (16) forment une bande en périphérie de la première feuille de verre (10).

10. Procédé selon l'une des revendications précédentes, dans lequel la couche opaque minérale (16) est de couleur noire, la clarté L* en réflexion côté verre étant de préférence inférieure ou égale à 10, notamment à 5.

11. Procédé selon l'une des revendications précédentes, dans lequel le dépôt de la couche minérale opaque (16) est réalisé par dépôt d'une composition d'émail comprenant une fritte de verre et des pigments.

12. Procédé selon l'une des revendications 1 à 10, dans lequel le dépôt de la couche minérale opaque (16) est réalisé par dépôt d'une composition de peinture aqueuse comprenant des pigments et une solution aqueuse de silicate alcalin.

13. Procédé selon l'une des revendications précédentes, dans lequel la couche minérale opaque (16) est déposée par sérigraphie ou par des techniques d'impression numérique.

14. Procédé selon l'une des revendications précédentes, dans lequel l'intercalaire de feuilletage (30) comprend au moins une feuille de polyvinylacétal, notamment de polyvinylbutyral.

15. Procédé selon l'une des revendications précédentes, dans lequel la feuille de verre supplémentaire (20) porte, sur la face opposée à la face tournée vers l'intercalaire de feuilletage (30), un empilement de couches minces supplémentaire (22), notamment un empilement à faible émissivité comprenant un oxyde transparent conducteur.

## Patentansprüche

1. Verfahren zum Herstellen einer gewölbten Verbundverglasung, insbesondere für eine Windschutzscheibe oder ein Dach eines Kraftfahrzeugs, umfassend die folgenden Schritte:
a. Bereitstellen einer ersten Glasscheibe (10), die auf mindestens einem Teil einer ihrer Flächen mit einem Dünnschichtstapel (12) beschichtet ist,
b. einen Schritt eines Aufbringens einer waschbaren auflösenden Schicht (14) auf einen Teil der Oberfläche des Dünnschichtstapels (12) in einem Bereich, der "randlos zu machender Bereich" (13) genannt wird,
c. einen Vorbrennschritt, an dessen Ende der Dünnschichtstapel (12), der sich unter der waschbaren auflösenden Schicht (14) befindet, durch die waschbare auflösende Schicht (14) aufgelöst wird,
d. einen Schritt eines Entfernens der waschbaren auflösenden Schicht (14) durch Waschen, wobei ein randloser Bereich (17) entsteht,
e. einen Schritt des Aufbringens einer opaken mineralischen Schicht (16) mindestens auf einen Teil des randlosen Bereichs (17),
f. einen Schritt eines Biegens der ersten Glasscheibe (10) und einer zusätzlichen Glasscheibe (20), zusammen oder getrennt,
g. einen Schritt eines Laminierens der ersten Glasscheibe (10) mit der zusätzlichen Glasscheibe (20) mittels einer Verbundzwischenlage (30), wobei der Dünnschichtstapel (12) der Verbundzwischenlage (30) zugewandt ist.

2. Verfahren nach Anspruch 1, wobei der Dünnschichtstapel (12) mindestens eine Funktionsschicht, insbesondere eine elektrisch leitfähige Funktionsschicht, die insbesondere aus Metallschichten, insbesondere aus Silber oder aus Niob, ausgewählt ist, und Schichten aus einem transparenten leitfähigen Oxid, das insbesondere aus Indium- und Zinnoxid, dotierten Zinnoxiden und dotierten Zinkoxiden ausgewählt ist, umfasst.

3. Verfahren nach einem der vorstehenden Ansprüche, wobei die waschbare auflösende Schicht (14) von einer fluiden, insbesondere flüssigen oder pastösen, Zusammensetzung aufgebracht wird.

4. Verfahren nach dem vorstehenden Anspruch, wobei die waschbare auflösende Schicht (14) durch Siebdruck aufgebracht wird.

5. Verfahren nach einem der vorstehenden Ansprüche, wobei die Dicke der waschbaren auflösenden Schicht (14) zwischen 5 und 50 µm, insbesondere zwischen 10 und 40 µm, beträgt

6. Verfahren nach einem der vorstehenden Ansprüche, wobei die waschbare auflösende Schicht (14) eine mineralische Schicht, umfassend mindestens ein Phosphat, ist.

7. Verfahren nach dem vorstehenden Anspruch, wobei das Phosphat ein Alkaliphosphat, vorzugsweise ein Natriumphosphat, ist.

8. Verfahren nach einem der vorstehenden Ansprüche, wobei sich an Schritt b unmittelbar ein Trocknungsschritt anschließt.

9. Verfahren nach einem der vorstehenden Ansprüche, wobei der randlose Bereich (17) und die opake mineralische Schicht (16) einen Streifen am Rand der ersten Glasscheibe (10) ausbilden.

10. Verfahren nach einem der vorstehenden Ansprüche, wobei die opake mineralische Schicht (16) eine schwarze Farbe besitzt, wobei die Klarheit L* in der glasseitigen Reflexion vorzugsweise kleiner als oder gleich 10, insbesondere 5, ist.

11. Verfahren nach einem der vorstehenden Ansprüche, wobei das Aufbringen der opaken mineralischen Schicht (16) durch Aufbringen einer Emailzusammensetzung, umfassend eine Glasfritte und Pigmente, erfolgt.

12. Verfahren nach einem der Ansprüche 1 bis 10, wobei das Aufbringen der opaken mineralischen Schicht (16) durch Aufbringen einer wässrigen Farbzusammensetzung, umfassend Pigmente und eine wässrige Alkalisilikatlösung, erfolgt.

13. Verfahren nach einem der vorstehenden Ansprüche, wobei die opake mineralische Schicht (16) durch Siebdruck oder durch digitale Drucktechniken aufgebracht wird.

14. Verfahren nach einem der vorstehenden Ansprüche, wobei die Verbundzwischenlage (30) mindestens eine Scheibe aus Polyvinylacetal, insbesondere aus Polyvinylbuytral, umfasst.

15. Verfahren nach einem der vorstehenden Ansprüche, wobei die zusätzliche Glasscheibe (20) auf der Seite, die der der Verbundzwischenlage (30) zugewandten Seite gegenüberliegt, einen zusätzlichen Dünnschichtstapel (22) trägt, insbesondere einen Stapel mit niedriger Emissivität, umfassend ein leitfähiges transparentes Oxid.

## Claims

1. A method for producing a curved laminated glazing, in particular for a windshield or roof of a motor vehicle, comprising the following steps:
a. providing a first glass sheet (10), coated on at least one part of one of its faces with a stack of thin layers (12),
b. a step of depositing, on one part of the surface of the stack of thin layers (12), in a zone called "zone to be cleared" (13), a washable dissolving layer (14),
c. a step of pre-firing after which the stack of thin layers (12) located under the washable dissolving layer (14) is dissolved by said washable dissolving layer (14),
d. a step of removing the washable dissolving layer (14) by washing, creating a cleared zone (17),
e. a step of depositing, at least on one part of the cleared zone (17), an opaque mineral layer (16),
f. a step of curving the first glass sheet (10) and an additional glass sheet (20), together or separately,
g. a step of laminating said first glass sheet (10) with the additional glass sheet (20) using a lamination interlayer (30), the stack of thin layers (12) being turned towards the lamination interlayer (30).

2. The method according to claim 1, such that the stack of thin layers (12) comprises at least one functional layer, in particular an electro-conducting functional layer, particularly selected from metallic layers, in particular made of silver or niobium, and the layers of a transparent conductive oxide, in particular selected from indium and tin oxide, doped tin oxides and doped zinc oxides.

3. The method according to one of the previous claims, wherein the washable dissolving layer (14) is deposited from a fluid composition, in particular a liquid or a paste.

4. The method according to the previous claim, wherein the washable dissolving layer (14) is deposited by screen printing.

5. The method according to one of the previous claims, wherein the thickness of the washable dissolving layer (14) is comprised between 5 and 50 µm, particularly between 10 and 40 µm

6. The method according to one of the previous claims, wherein the washable dissolving layer (14) is a mineral layer comprising at least one phosphate.

7. The method according to the previous claim, wherein the phosphate is an alkaline phosphate, preferably a sodium phosphate.

8. The method according to one of the previous claims, wherein step b is immediately followed by a drying step.

9. The method according to one of the previous claims, wherein the cleared zone (17) and the opaque mineral layer (16) form a strip around the periphery of the first glass sheet (10).

10. The method according to one of the previous claims, wherein the opaque mineral layer (16) is black, the lightness L* in reflection of the glass side being preferably less than or equal to 10, in particular to 5.

11. The method according to one of the previous claims, wherein the deposit of the opaque mineral layer (16) is achieved by depositing an enamel composition comprising a glass frit and pigments.

12. The method according to one of claims 1 to 10, wherein the deposit of the opaque mineral layer (16) is achieved by depositing an aqueous paint composition comprising pigments and an aqueous solution of alkaline silicate.

13. The method according to one of the previous claims, wherein the opaque mineral layer (16) is deposited by screen printing or by digital printing techniques.

14. The method according to one of the previous claims, wherein the lamination interlayer (30) comprises at least one sheet of polyvinylacetal, in particular of polyvinylbutyral.

15. The method according to one of the previous claims, wherein the additional glass sheet (20) bears, on the face opposite the face turned to the lamination interlayer (30), an additional stack of thin layers (22), in particular a stack with low emissivity comprising a transparent conductive oxide.
